# EUROPEAN PATENT SPECIFICATION

(11) **EP 3 924 142 B1**
(45) Date of publication and mention of the grant of the patent: **08.03.2023**
(21) Application number: 20710424.1
(22) Date of filing: 10.02.2020
(51) Int. Cl.: B23Q 1/00, B23Q 17/00

(54) **POSITIONING DEVICE FOR MACHINE TOOLS AND MACHINING CENTERS**
POSITIONIERVORRICHTUNG FÜR WERKZEUGMASCHINEN UND BEARBEITUNGSZENTREN
DISPOSITIF DE POSITIONNEMENT POUR MACHINES-OUTILS ET CENTRES D'USINAGE

(30) Priority: 12.02.2019 IT 201900001983
(43) Date of publication of application: 22.12.2021
(73) Proprietor: Bronzino, Pier Mauro, 10040 Caprie (IT); Bronzino, Walter, 10055 Condove (IT)
(72) Inventor: Bronzino, Pier Mauro, 10040 Caprie (IT); Bronzino, Walter, 10055 Condove (IT)
(74) Representative: Modiano, Micaela Nadia
(86) International application number: PCT/EP2020/053323
(87) International publication number: WO 2020/165090

(56) References cited:
- EP-A1- 2 036 662
- JP-A- 2014 200 871

## Description

The present invention relates to a positioning device for machine tools and machining centers.

As is known, a part to be machined in a generic machining center can be mounted on a part holder plate or pallet, which is adapted to be locked stably and in a precise position within the work area by means of multiple devices known as positioning devices.

A generic positioning device comprises a support provided with two or more locking inserts which can slide radially with respect to an axis. The locking inserts are actuated for closure by preloaded springs in order to grip a respective locking pin stably which is fixed to the lower base of the pallet, and can be actuated to be opened by pneumatic means. An example of such positioning devices is disclosed in document EP 2036662 A1, which the preamble of claim 1 is based on.

In current production lines, the operations for loading and unloading the pallets can be performed in an automated or semi-automated manner, for example by a robot or by other mechanized transfer systems, such as a motorized tackle.

The loading and unloading of the pallets is normally performed without checking beforehand whether the locking inserts are actually open.

This circumstance, if the locking inserts have not been opened, due for example to a failure of the pneumatic system, can be a source of damage and even of risks for safety, especially during unloading steps.

In fact, if a robot is used, it would attempt in any case to lift the pallet, forcing the internal mechanisms of the positioning device to the point of damaging them.

On the other hand, if one uses a more powerful device, such as a motorized tackle for large loads, said device might be able to move or even lift the machine tool, with obvious risks for nearby personnel.

The aim of the present invention is to provide a positioning device for machine tools and machining centers that is capable of generating a highly reliable and precise clearance signal that indicates the opening of the locking inserts.

Within this aim, an object of the invention is to provide a positioning device that can be calibrated easily and accurately in relation to the stroke of the locking inserts.

Another object of the invention is to provide a positioning device that operates with an extremely low energy expenditure.

A further object of the invention is to provide a solution that can be implemented easily in currently commercially available positioning devices.

This aim, these objects and other advantages as will become better apparent from the continuation of the description are achieved by a positioning device having the characteristics described in claim 1, while the dependent claims define other advantageous, albeit secondary, characteristics of the invention.

The invention is now described in greater detail with reference to some preferred but not exclusive embodiments thereof, illustrated by way of nonlimiting example in the accompanying drawings, wherein:
Figure 1 is a perspective view of a positioning device according to the invention;
Figure 2 is an axial sectional view of the positioning device of Figure 1, in a first operating configuration;
Figure 3 is a view, similar to Figure 2, showing the positioning device in a second operating configuration;
Figure 4 is an enlarged-scale view of a detail of Figure 3;
Figure 5 is a view, similar to Figure 3, showing an alternative embodiment of the invention.

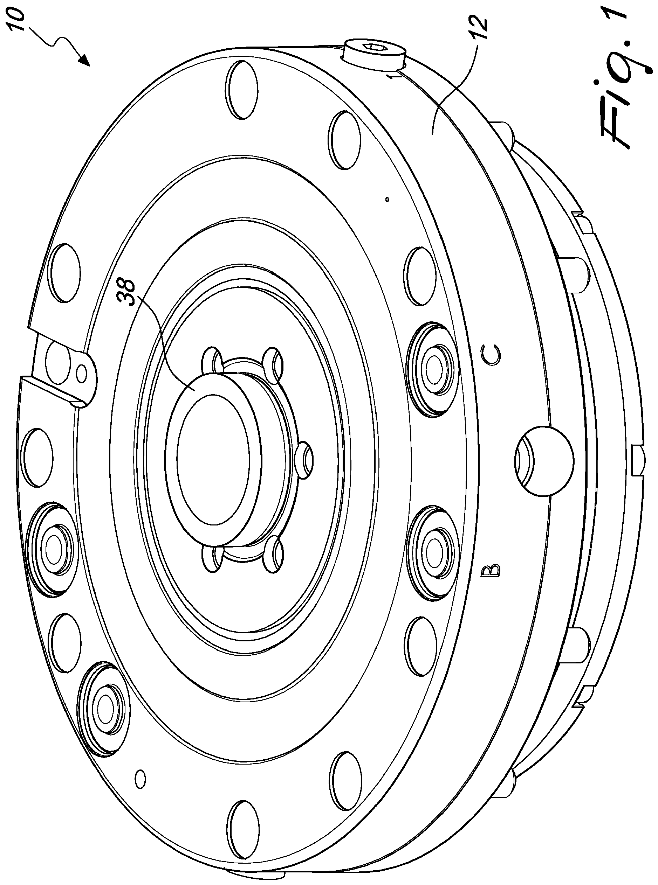

With initial reference to Figures 1-4, a positioning device 10 for machine tools and machining centers comprises a body 12 in which there is a pneumatically sealed annular chamber 14.

One axial end of the annular chamber 14 is delimited by a bottom 16. The bottom 16 has a hollow cylindrical appendage 16a which rises axially toward the inside of the annular chamber 14 and ends with an end wall 16b provided with a central hole 16c.

The opposite axial end of the annular chamber 14 is delimited by a back wall 18 obtained monolithically from the body 12. The back wall 18 has an outermost annular portion 18a which extends on a plane that is perpendicular to the axis of the annular chamber 14, an intermediate cylindrical portion 18b which extends axially towards the bottom 16, and an innermost annular portion 18c which is parallel to the outermost annular portion 18a, which engages sealingly the outer edge of the end wall 16b.

The annular chamber 14 accommodates slidably an annular piston 20 which engages hermetically the outer wall of the annular chamber 14 with its outside diameter and the hollow cylindrical appendage 16a with its inside diameter.

The annular piston 20 is provided with three oblique guides 28 which converge in the opposite direction with respect to the annular bottom 16.

The part holder device 10, in this embodiment, is provided with three locking inserts 32.

The locking inserts 32 are received slidably and sealingly in respective radial guiding seats 36 provided in the body 12, in order to translate between an innermost locking position and an outermost loading/unloading position. In the locking position, the locking inserts 32 are adapted to engage stably for retention, with a grip end 37 thereof, a securing pin 38, which in turn can be fixed to a generic part holder plate or pallet (not shown). In the loading/unloading position, the locking inserts 32 allow the insertion/extraction of the securing pin 38.

The locking inserts 32 are provided with respective complementary oblique guides 40 which engage slidably the oblique guides 28 of the annular piston 20. In this manner, the opening and closing of the locking inserts 32 is constrained to the axial movements of the annular piston 20, which acts as an actuator.

The annular piston 20 is actuated elastically in the direction for closure of the locking inserts 32 by a series of preloaded springs 44, which are functionally interposed between the annular piston 20 and the body 12, and can be actuated to open by feeding pressurized air in the bottom side region of the annular chamber 14.

The positioning device 10 is provided with valve means 52 for the detection and indication of the open position of the locking inserts 32.

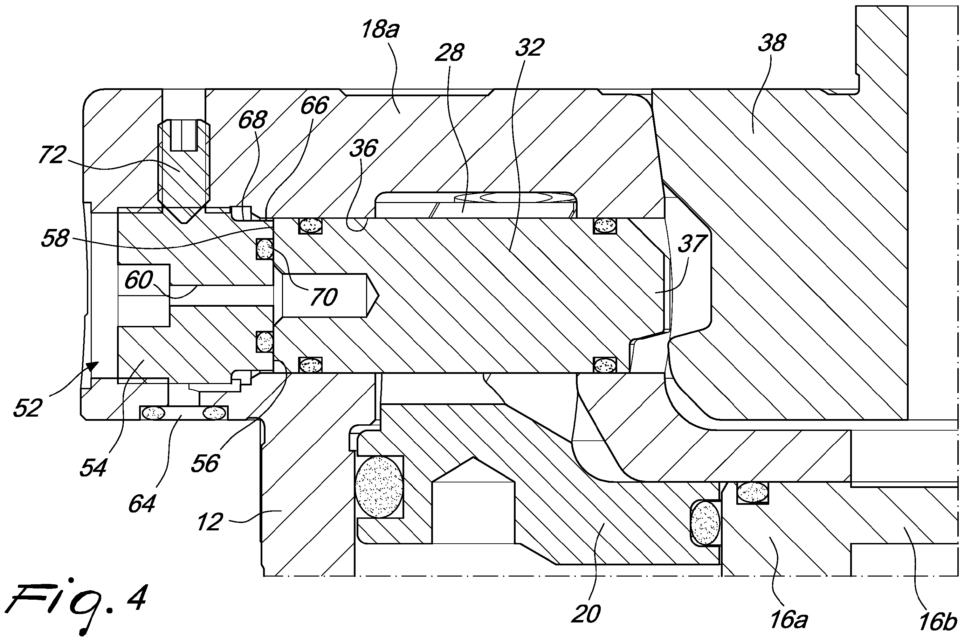

With particular reference to Figure 4, the valve means 52 according to the invention comprise a valve body 54, which is screwed sealingly in one of the radial guiding seats 36 externally with respect to the respective locking insert 32.

The valve body 54 has a front surface 56 which faces an end surface 58 of the locking insert 32 that is opposite the grip end 37. In the embodiment described here, the front surface 56 and the end surface 58 are substantially flat and perpendicular to the direction in which the locking insert 32 translates in the respective radial guiding seat 36.

The valve body 54 is provided with a calibrated hole 60 which extends from the front surface 56 to the opposite end of the valve body, which is open to the atmosphere.

The end surface 58 of the locking insert 32 is adapted to abut against the front surface 56 of the valve body 54 when the locking insert 32 is in its loading/unloading position, so as to obstruct the calibrated hole 60 at least partially or totally, as in the embodiment described herein.

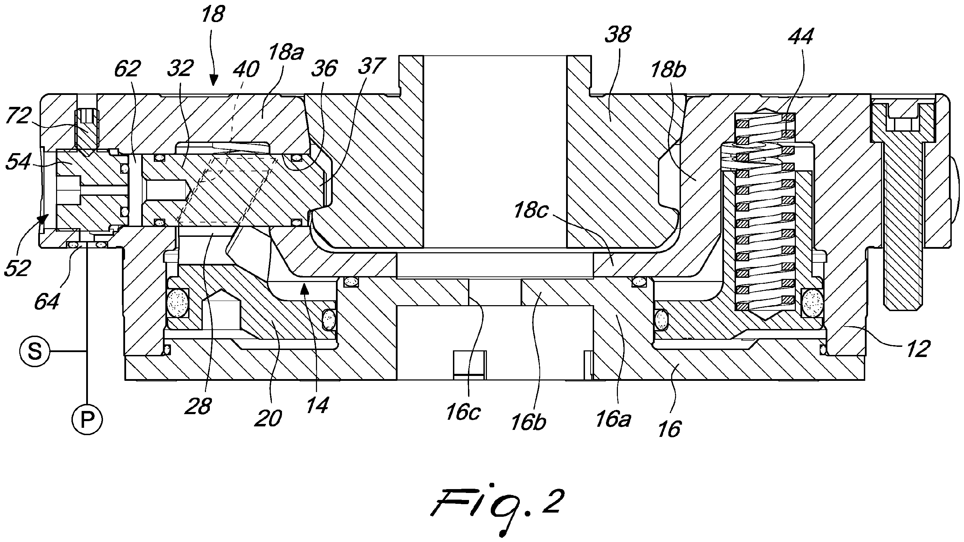

When the locking insert 32 is in the grip position, a volume 62 (Figure 2) is formed between the front surface 56 of the valve body 54 and the end surface 58 of the locking insert 32 and is subject to the pressure of a pneumatic circuit C, shown schematically in Figure 2. The pneumatic circuit C is connected to a pressure source P and is provided with a pressure sensor S.

In the embodiment described herein, the pneumatic circuit C connects to an inlet 64 provided in the body 12, which communicates with the volume 62 through a narrow annular passage 66 formed between the lateral surface 68 of the end of the valve body 54 that is adjacent to the front surface 56 and the internal surface of the radial guiding seat 36.

Advantageously, the front surface 56 of the valve body 54 is provided with an annular gasket 70 which surrounds the calibrated hole 60 in order to ensure a pneumatic seal when the end surface 58 abuts against the front surface 56, with the calibrated hole 60 therefore completely obstructed. However, as will become apparent hereinafter, the pneumatic seal might not be necessary for operating purposes and therefore the annular gasket is not to be considered as an indispensable element.

Advantageously, the valve body is retained radially in position by a locking grub screw 72 screwed in the body 12.

In operation, as already mentioned, the locking inserts 32 are normally actuated to close by the preloaded springs 44.

In this step the circuit C feeds pressurized air into the volume 62 and said air flows toward the atmosphere through the calibrated hole 60. The pressure in the circuit C is therefore determined by the diameter of the calibrated hole 60, which provides a throttling region.

In order to open the positioning device and release the locking pin 38, compressed air is fed into the bottom side region of the annular chamber 14, thus producing the opening of the locking inserts 32 by sliding engagement between the oblique guides 28 of the annular piston 20, which rises in contrast with the action of the preloaded springs 44, and the oblique complementary guides 40 of the locking inserts 32.

At the end of its radial outward opening stroke, the end surface 58 of the locking insert 32 abuts against the front surface 56 of the valve body 54 by means of the annular gasket 70, obstructing the flow of air toward the atmosphere through the calibrated hole 60.

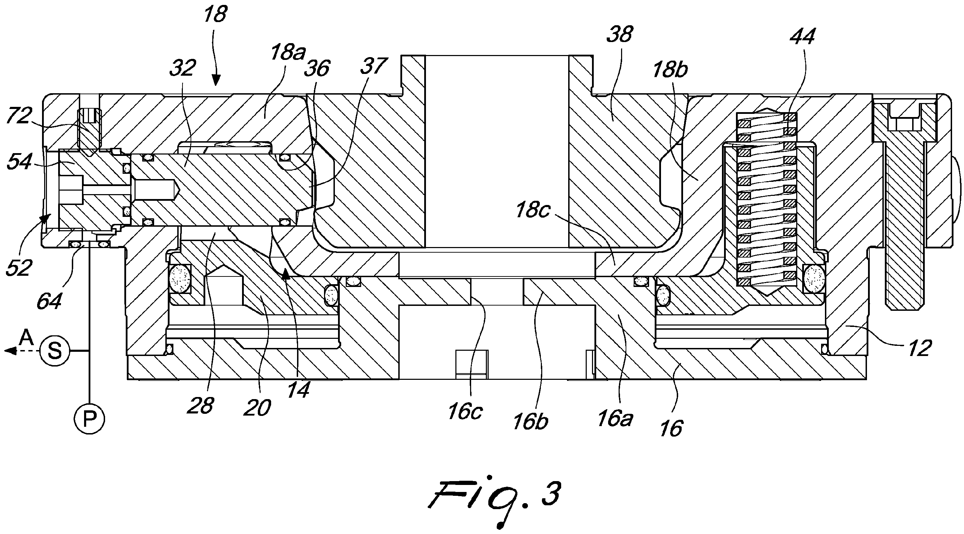

This causes an increase in the pressure in the pneumatic circuit C, which is detected by the pressure sensor S, which in turn generates a corresponding clearance signal A (Figure 3) for a generic pallet loading/unloading apparatus (not shown), for example, a robot or a motorized tackle.

In terms of energy consumption, it is desirable to minimize the dimensions of the calibrated hole 60 in order to minimize the air flow when the locking inserts 32 are in the closed position.

Furthermore, as mentioned earlier, in order to achieve the invention it is not strictly necessary to close the calibrated hole 60 sealingly. In fact, it would be sufficient to further throttle the air flow toward the atmosphere when the locking inserts open, so as to generate a pressure increase that can be detected by the sensor S. In this regard, the annular gasket, which moreover might also be applied to the locking insert instead of to the valve body, is to be considered an element that is useful but not indispensable to achieve the object of the invention.

It has been demonstrated that the positioning device according to the invention achieves the intended aim and objects, generating a highly reliable and precise clearance signal that indicates the opening of the locking inserts.

The calibration of the system also is very simple and precise. It is in fact sufficient to move the locking inserts 32 to their open position, insert the valve 52 in one of the radial guiding seats 36 until the front surface 56 of the valve body 54 abuts against the end surface 58 of the insert, and finally lock the valve in position by tightening the locking grub screw 72.

Furthermore, it has been found that by sizing the calibrated hole 60 so as to minimize the air flow when the locking inserts 32 are in the closed position, the described system also has a reduced energy consumption.

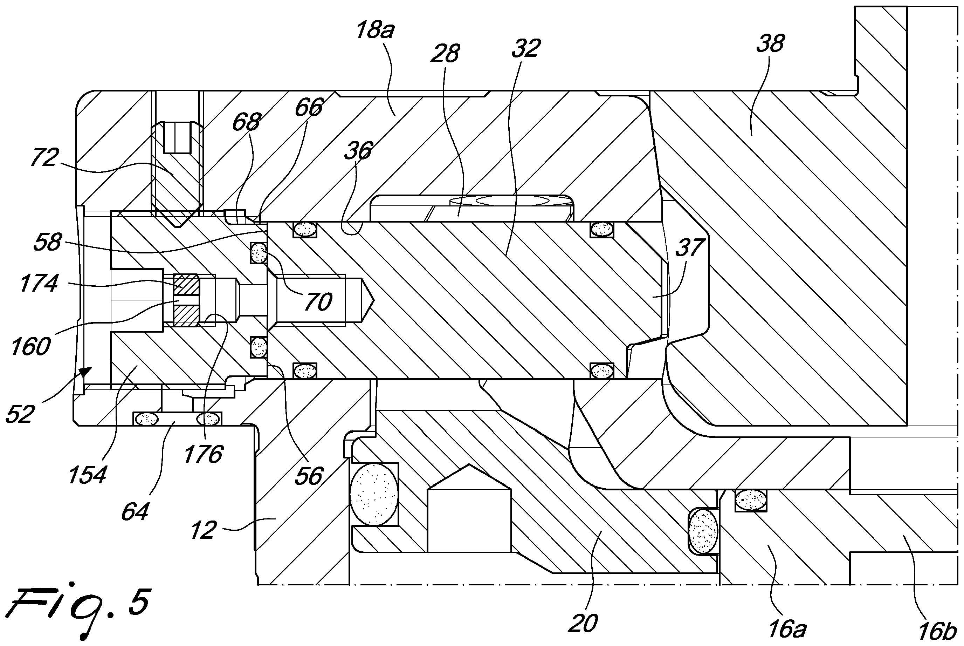

In this regard, Figure 5 shows an alternative embodiment of the invention, which differs from the preceding one exclusively in that the calibrated hole 160 is not provided directly in the valve body 154 but in a throttling grub screw 174 that is screwed in a threaded through hole 176 provided in the valve body 154. In this manner, for the purpose of air flow adjustment, it is sufficient to replace the throttling grub screw 174 with another one provided with a hole having different dimensions.

Some preferred embodiments of the invention have been described herein, but of course the person skilled in the art may apply various modifications and variations within the scope of the claims.

For example, the front surface of the valve body and the end surface of the locking insert might have profiles that are different than the ones described and shown, so long as they are capable of obstructing or reducing significantly the air flow toward the atmosphere through the calibrated hole when they are in mutual abutment, for example, frustum-like profiles.

Furthermore, it is evident that the solution described above would be equally applicable even if the grip were performed from the inside toward the outside, in this case arranging the valve means on the inner side of the locking inserts instead of on the outer side.

Moreover, the invention is of course equally applicable to positioning devices provided with a different number of sliding inserts, for example two, four, six or more sliding inserts, or in an extreme case even just one sliding insert and one fixed insert.

Furthermore, the valve body and the guiding seat might have a smooth surface instead of a threaded one, and locking might be provided exclusively by means of a threaded grub screw or other fixing system that can be devised by the person skilled in the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A positioning device for machine tools and machining centers, comprising a body (12) which supports at least one locking insert (32) which is slidably and sealingly received in a respective guiding seat (36) in order to translate between a locking position and a loading/unloading position, **characterized in that** it comprises valve means (52) for detecting the position of said locking insert (32), wherein said valve means comprise
- a valve body (54, 154), which is inserted sealingly in said guiding seat (36) and has a front surface (56) which faces an end surface (58) of said locking insert (32) which is opposite to a grip end (37) thereof, and a calibrated hole (60, 160) which extends from said front surface (56) to the atmosphere, and
- a pneumatic circuit (64, 66, C, P) provided with pressure sensing means (S), which is adapted to supply pressurized air into said guiding seat (36) between said valve body (54, 154) and said locking insert (32),
said end surface (58) being adapted to abut frontally against said front surface (56), with said locking insert (32) in the loading/unloading position, so as to obstruct at least partially the outflow of air through said calibrated hole (60, 160), said pressure sensing means (S) being adapted to detect a consequent increase in pressure and to generate a corresponding clearance signal (A).

2. The positioning device according to claim 1, **characterized in that** one of said front surface (56) and said end surface (58) is provided with an annular gasket (70) which is adapted to provide a pneumatic seal around said calibrated hole (60, 160) when said end surface (58) is in abutment against said front surface (56).

3. The positioning device according to claim 1 or 2, **characterized in that** said front surface (56) and said end surface (58) are substantially planar and perpendicular to the sliding direction of said locking insert (32).

4. The positioning device according to one or more of the preceding claims, **characterized in that** said valve body (54, 154) is retained radially in position by a locking grub screw (72) which is screwed into said body (12).

5. The positioning device according to one or more of the preceding claims, **characterized in that** said valve body (54, 154) is screwed into said guiding seat (36).

6. The positioning device according to one or more of the preceding claims, **characterized in that** said calibrated hole (60) is formed directly in said valve body (54).

7. The positioning device according to one or more of the preceding claims, **characterized in that** said calibrated hole (160) is formed in an interchangeable throttling grub screw (174) which is accommodated in said valve body (154).

## Patentansprüche

1. Eine Positioniervorrichtung für Werkzeugmaschinen und Bearbeitungszentren, die einen Körper (12) umfasst, der mindestens einen Blockiereinsatz (32) trägt, welcher gleitend und abdichtend in einen entsprechenden Führungssitz (36) aufgenommen ist, um eine Translationsbewegung zwischen einer Blockierposition und einer Lade-/Entladeposition durchzuführen; **dadurch gekennzeichnet, dass** sie Ventilmittel (52) zur Erfassung der Position des Blockiereinsatzes (32) umfasst, wobei die Ventilmittel Folgendes umfassen:
- einen Ventilkörper (54, 154), der abdichtend in den Führungssitz (36) eingesetzt ist und eine Vorderfläche (56) hat, die einer Endfläche (58) des Blockiereinsatzes (32) zugewandt ist, welche einem Griffende (37) desselben gegenüberliegt, und ein kalibriertes Loch (60, 160), das sich von der Vorderfläche (56) in die Atmosphäre erstreckt, und
- einen Pneumatikkreis (64, 66, C, P), ausgestattet mit Druckerfassungsmitteln (S), der ausgebildet ist, um dem Führungssitz (36) zwischen dem Ventilkörper (54, 154) und dem Blockiereinsatz (32) Druckluft zuzuführen;
wobei die Endfläche (58) ausgebildet ist, um frontal an die Vorderfläche (56) anzustoßen, wenn der Blockiereinsatz (32) sich in der Lade-/Entladeposition befindet, um das Ausströmen von Luft durch das kalibrierte Loch (60, 160) zumindest teilweise zu behindern,
wobei die Druckerfassungsmittel (S) ausgebildet sind, um eine daraus folgende Druckerhöhung zu erfassen und ein entsprechendes Auslösesignal (A) zu erzeugen.

2. Die Positioniervorrichtung gemäß Anspruch 1, **dadurch gekennzeichnet, dass** entweder die Vorderfläche (56) oder die Endfläche (58) mit einem Dichtring (70) ausgestattet ist, der ausgebildet ist, um eine Pneumatikabdichtung um das kalibrierte Loch (60, 160) bereitzustellen, wenn die Endfläche (58) an die Vorderfläche (56) anstößt.

3. Die Positioniervorrichtung gemäß Anspruch 1 oder 2, **dadurch gekennzeichnet, dass** die Vorderfläche (56) und die Endfläche (58) im Wesentlichen flach und senkrecht zur Gleitrichtung des Blockiereinsatzes (32) sind.

4. Die Positioniervorrichtung gemäß einem oder mehreren der obigen Ansprüche, **dadurch gekennzeichnet, dass** der Ventilkörper (54, 154) von einem Gewinde-Sicherungsstift (72), der in den Körper (12) eingeschraubt wird, radial in seiner Position gehalten wird.

5. Die Positioniervorrichtung gemäß einem oder mehreren der obigen Ansprüche, **dadurch gekennzeichnet, dass** der Ventilkörper (54, 154) in den Führungssitz (36) eingeschraubt ist.

6. Die Positioniervorrichtung gemäß einem oder mehreren der obigen Ansprüche, **dadurch gekennzeichnet, dass** das kalibrierte Loch (60) direkt in dem Ventilkörper (54) geformt ist.

7. Die Positioniervorrichtung gemäß einem oder mehreren der obigen Ansprüche, **dadurch gekennzeichnet, dass** das kalibrierte Loch (160) in einer austauschbaren Drossel-Madenschraube (174) geformt ist, die in dem Ventilkörper (154) untergebracht ist.

## Revendications

1. Dispositif de positionnement pour des machines-outils et des centres d'usinage, comportant un corps (12) qui supporte au moins un insert de blocage (32) qui est reçu de manière coulissante et étanche dans un logement de guidage (36) respectif afin de se déplacer en translation entre une position de blocage et une position de chargement/déchargement, **caractérisé en ce qu'**il comporte des moyens de soupape (52) pour détecter la position dudit insert de blocage (32), dans lequel lesdits moyens de soupape comportent
- un corps de soupape (54, 154), qui est inséré de manière étanche dans ledit logement de guidage (36) et a une surface avant (56) qui est dirigée vers une surface d'extrémité (58) dudit insert de blocage (32) qui est opposée à une extrémité de prise (37) de celui-ci, et un trou calibré (60, 160) qui s'étend à partir de ladite surface avant (56) jusqu'à l'atmosphère, et
- un circuit pneumatique (64, 66, C, P) pourvu de moyens de détection de pression (S), qui est adapté pour fournir de l'air mis sous pression dans ledit logement de guidage (36) entre ledit corps de soupape (54, 154) et ledit insert de blocage (32),
ladite surface d'extrémité (58) étant adaptée pour venir frontalement en butée contre ladite surface avant (56), avec ledit insert de blocage (32) dans la position de chargement/déchargement, de manière à entraver au moins partiellement l'écoulement de sortie d'air à travers ledit trou calibré (60, 160), lesdits moyens de détection de pression (S) étant adaptés pour détecter une augmentation conséquente de pression et pour générer un signal de dégagement (A) correspondant.

2. Dispositif de positionnement selon la revendication 1, **caractérisé en ce qu'**une surface parmi ladite surface avant (56) et ladite surface d'extrémité (58) est pourvue d'un joint annulaire (70) qui est adapté pour assurer une étanchéité pneumatique autour dudit trou calibré (60, 160) lorsque ladite surface d'extrémité (58) est en butée contre ladite surface avant (56).

3. Dispositif de positionnement selon la revendication 1 ou 2, **caractérisé en ce que** ladite surface avant (56) et ladite surface d'extrémité (58) sont sensiblement planes et perpendiculaires à la direction de coulissement dudit insert de blocage (32).

4. Dispositif de positionnement selon une ou plusieurs des revendications précédentes, **caractérisé en ce que** ledit corps de soupape (54, 154) est retenu radialement en position par une vis sans tête de blocage (72) qui est vissée dans ledit corps (12).

5. Dispositif de positionnement selon une ou plusieurs des revendications précédentes, **caractérisé en ce que** ledit corps de soupape (54, 154) est vissé dans ledit logement de guidage (36).

6. Dispositif de positionnement selon une ou plusieurs des revendications précédentes, **caractérisé en ce que** ledit trou calibré (60) est formé directement dans ledit corps de soupape (54).

7. Dispositif de positionnement selon une ou plusieurs des revendications précédentes, **caractérisé en ce que** ledit trou calibré (160) est formé dans une vis sans tête d'étranglement interchangeable (174) qui est reçue dans ledit corps de soupape (154).
